# EUROPEAN PATENT APPLICATION

(11) **EP 2 843 555 A1**
(43) Date of publication of application: **04.03.2015**
(21) Application number: 14178726.7
(22) Date of filing: 28.07.2014
(51) Int. Cl.: G06F 11/20

(54) **Information processing system and method for processing failure**

(30) Priority: 27.08.2013 JP 2013175250
(71) Applicant: FUJITSU LIMITED, Kawasaki-shi, Kanagawa 211-8588 (JP)
(72) Inventor: Yuuki, Kazuhiro, Kanagawa, 211-8588 (JP)
(74) Representative: Hoffmann Eitle

(57) **Abstract**

An information processing system includes a plurality of nodes and a shared memory connected to the plurality of nodes. Each of the nodes includes a plurality of functional circuits, a control device, and a register configured to store a plurality of interrupt factors that occur in the plurality of functional circuits. And The control device in one node among the plurality of nodes receives the interrupt factor in each register of a plurality of other nodes in response to an occurrence of the interrupt factor, extracts an interrupt factor to be detected as a failure among the received interrupt factors, specifies a fail node according to an extraction result, and, after suppressing access to the shared memory by the fail node, controls to separate the fail node from the information processing system on basis of log information received from the plurality of other nodes.

## Description

### FIELD

The embodiment discussed herein is related to an information processing system and a failure processing method of the information processing system.

### BACKGROUND

An information processing system including a plurality of nodes has, for example, a building block (BB) structure. For example, in an information processing system in which a plurality of nodes share a memory, the nodes share the memory via the crossbar. An application operating in the information processing system uses the shared memory to improve processing performance of the system. On the other hand, operating systems (hereinafter referred to as OSs) and hypervisors operating in the respective nodes operate on local memories of the nodes. Since the OSs and the hypervisors operate on the local memories, independency of the nodes increases and availability of the system is improved.

In such an information processing system, when a failure occurs in hardware of a part of the nodes, the fail node in which the failure occurs needs to be detected. Further, in a state in which the fail node is separated from the system, the operation of the system needs to be resumed. The detection of the failure of the hardware is disclosed in, for example, Japanese Patent Application Laid-Open No. 2011-248653.

The information processing system sequentially specifies the fail node and analyzes the necessity of separation of the fail node from the system on the basis of log information including events of failures. Therefore, according to increases in the number of nodes of the information processing system and types of the events of the failures, an analysis time for specifying the fail node and analyzing the necessity of the separation of the fail node from the system also increases. Since a data amount of the log information is enormous, times is also consumed by collection of the log information.

### SUMMARY

According to one aspect, it is an object in one aspect of the embodiment provide an information processing system and a method for processing a failure in the information processing system for quickly reducing the influence of a fail node on other nodes when a failure occurs.

According to a first aspect of the embodiment, an information processing system includes a plurality of nodes, and a shared memory connected to the plurality of nodes, wherein each of the nodes includes, a plurality of functional circuits, a control device configured to control the functional circuits, and a register configured to store a plurality of interrupt factors that occur in the plurality of functional circuits, and wherein the control device in one node among the plurality of nodes receives the interrupt factor in each register of a plurality of other nodes in response to an occurrence of the interrupt factor of one node among the plurality of other nodes, extracts an interrupt factor to be detected as a failure among the received interrupt factors, specifies a fail node according to an extraction result, and, after suppressing access to the shared memory by the fail node, controls to separate the fail node from the information processing system on basis of log information received from the plurality of other nodes..

### BRIEF DESCRIPTION OF DRAWINGS

FIG. 1 is a diagram for explaining an overview of an information processing system 1 in an embodiment.
FIG. 2 is a diagram depicting an example of the configuration of the information processing system 1 depicted in FIG. 1.
FIG. 3 is a diagram for explaining an example of the configuration of the system boards 1A to 1P depicted in FIG. 2.
FIGS. 4A and 4B are diagrams for explaining the register rg depicted in FIG. 3.
FIG. 5 is a diagram for explaining a flow of processing performed when a failure occurs in a part of the nodes of the information processing system 1 in this embodiment explained with reference to FIGS. 1 to 3.
FIG. 6 is a diagram for explaining an overview of analysis processing for the log information (S1) in the system control device V1 of the master node 2AB explained with reference to FIG. 5.
FIGS. 7A and 7B are diagrams illustrating time consumed by the analysis processing for the log information in FIG. 6 (S1 in FIG. 6) and the FNL analysis processing (S3).
FIG. 8 is a software module diagram of the nodes of the information processing system in this embodiment.
FIG. 9 is a diagram of an example of the file node list (FNL) 40 explained with reference to FIG. 8.
FIG. 10 is a diagram for explaining, in time series, a flow of processing in the system control device V1 of the master node 2AB and the system control device 22 of the slave node 1A performed while an interrupt factor occurs and the FNL is updated.
FIG. 11 is a flowchart for explaining the processing of the FNL analyzing unit 31 and the processing of the FNL updating unit 33 in this embodiment depicted in FIG. 8.
FIG. 12 is a flowchart for explaining the suppression processing for the affected interrupt factors.
FIGS. 13A and 13B are diagrams depicting a specific example of the FNDB 36.
FIGS. 14A and 14B are diagrams depicting a specific example of a definition table tb2 including the action number (act).
FIG. 15 is a diagram for explaining a suppression range of a memory in the specific example.

### DESCRIPTION OF EMBODIMENTS

### [Overview of an information processing system]

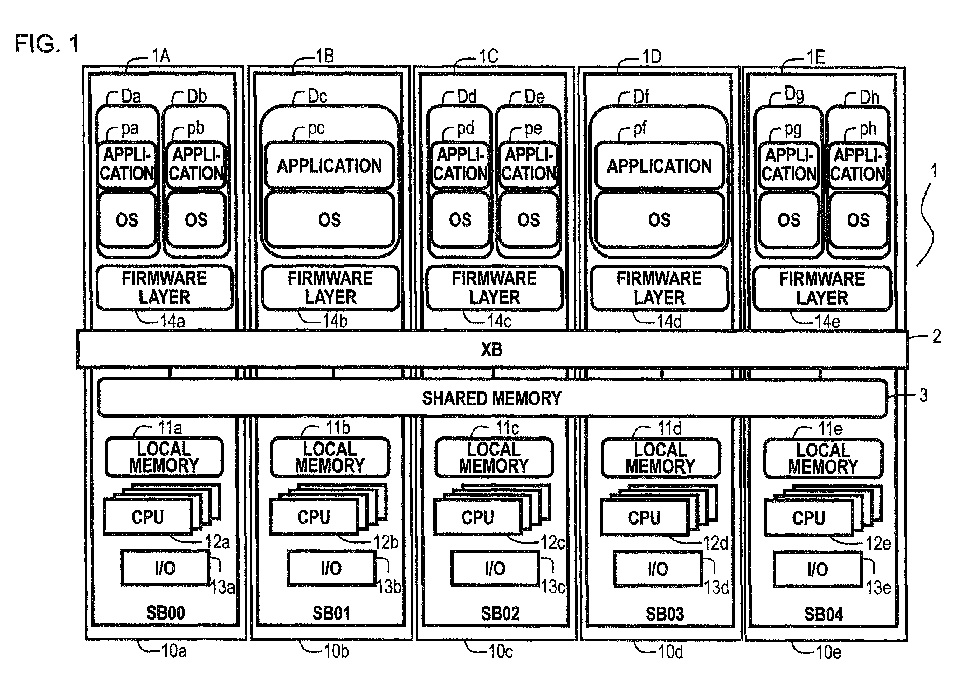

FIG. 1 is a diagram for explaining an overview of an information processing system 1 in an embodiment. The information processing system 1 depicted in FIG. 1 is a computer system of a high performance computing (HPC) model or the like. Such a system is configured by a building block (BB) structure. Building blocks 10a to 10e house system boards 1A to 1E depicted in FIG. 1 and can be inserted into and pulled out of racks. The information processing system 1 depicted in FIG. 1 includes a plurality of system boards 1A to 1E and a system board including a network connecting device (hereinafter referred to as crossbar switch) 2. The system boards 1A to 1E are connected to one another via a crossbar switch 2. In FIG. 1, five system boards 1A to 1E are depicted. However, the information processing system 1 includes, for example, sixteen system boards.

The system board 1A includes a plurality of central processing units (CPUs) 12a, memories 3 and 11a, and an input output (I/O) device 13a. A part of regions of the memories 3 and 11a is used as a share memory 3 shared by all CPUs included in the information processing system 1. The other part of the regions is used as a local region 11a in which the CPUs 12a store kernel data and the like. The other system boards 1B to 1E include a configuration same as the configuration of the system board 1A. In the following explanation, the system boards are referred to as nodes.

In a firmware layer 14a of the node 1A, for example, control software called hypervisor operates. The hypervisor logically divides resources of the node 1A and generates one or a plurality of logical partitions Da and Db. When the plurality of logical partitions Da and Db are generated, a plurality of operating systems (hereinafter referred to as OSs) can operate on one node. In an example depicted in FIG. 1, the OSs (e.g., Solaris (registered trademark)) operating on the logical partitions Da and Db may be different kinds of OSs.

Applications pa to ph operating on the logical partitions Da to Dh use, for example, the shared memory 3. That is, in this embodiment, a distributed shared memory is configured in which the nodes include parts of the shared memory 3 and use the shared memory 3 of the other nodes. The applications pa to ph perform predetermined processing on the basis of shared information stored in the shared memory 3. The hypervisors and the OSs operate on the respective local memories 11a to 11e. Consequently, independency of the nodes increases and availability of the system is improved.

In the information processing system 1 including the distributed shared memory 3, for example, when the CPUs 12a of the node 1A access a region of the shared memory 3 of a node (e.g., the node 1B) different from the node 1A on the shared memory 3 in executing the application pa, the CPUs 12a transmit a request for access to the region of the shared memory 3 of the node 1B via the crossbar switch 2. When the CPUs 12a access a region of the shared memory 3 of the own node 1A, the CPUs 12a transmit a request for memory access via direct connection.

### [Configuration of the information processing system]

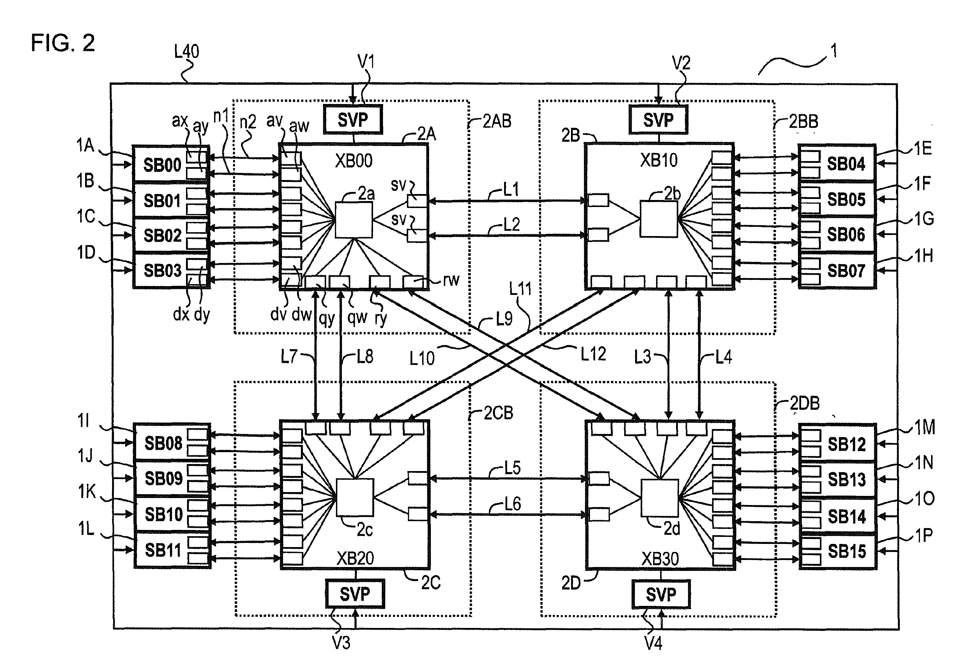

FIG. 2 is a diagram depicting an example of the configuration of the information processing system 1 depicted in FIG. 1. In FIG. 2, components same as the components depicted in FIG. 1 are denoted by the same reference numerals and signs. As depicted in FIG. 2, the information processing system 1 includes, for example, sixteen system boards (SBs) 1A to 1P functioning as processing devices and four crossbar switch boxes 2AB to 2DB. Crossbar switches 2A to 2D respectively included in the crossbar switch boxes 2AB to 2DB correspond to the crossbar switch 2 depicted in FIG. 1. In this embodiment, the crossbar switch boxes 2AB to 2DB also have the building block structure.

In the example depicted in FIG. 2, the crossbar switch box 2AB includes the crossbar switch 2A and a system control device (service processor: SVP) V1. The system control device V1 of the crossbar switch box 2AB performs state monitoring, state setting, start and stoop control, and the like of the crossbar switch 2A. The crossbar switch 2A includes a switch 2a and ports av, aw to dv, dw, qv, qw, rv, rw, sv, and sw. The switch 2a switches a communication path. The configuration of the other crossbar switch boxes 2BB to 2DB is the same.

In the example depicted in FIG. 2, the system board 1A includes two connection ports ax and ay to the crossbar switch 2A. The crossbar switch 2A includes two connection ports av and aw to the system board 1A. That is, the system boards 1A is connected to the crossbar switch 2A corresponding thereto by two lines n1 and n2. In this way, the crossbar switches 2A to 2D depicted in FIG. 2 are symmetrical crossbar switches including double lines between the crossbar switches and connection targets. Since the crossbar switches 2A to 2D include the double lines, even when a failure occurs in a line on one side, the crossbar switches 2A to 2D can operate using the remaining one line.

In this example, the first, second, third, and fourth system boards 1A, 1B, 1C, and 1D are connected to the first crossbar switch 2A. The fifth, sixth, seventh, and eighth system boards 1E, 1F, 1G, and 1H are connected to the second crossbar switch 2B. The ninth, tenth, eleventh, and twelfth system boards 1I, 1J, 1K, and 1L are connected to the third crossbar switch 2C. The thirteenth, fourteenth, fifteenth, and sixteenth system boards 1M, 1N, 1O, and 1P are connected to the fourth crossbar switch 2D.

In the example depicted in FIG. 2, the first crossbar switch 2A is connected to the second crossbar switch 2B by buses L1 and L2. The first crossbar switch 2A is connected to the third crossbar switch 2C by buses L7 and L8. The first crossbar switch 2A is connected to the fourth crossbar switch 2D by buses L9 and L10. The second crossbar switch 2B is connected to the third crossbar switch 2C by buses L11 and L12. The second crossbar switch 2B is connected to the fourth crossbar switch 2D by busses L3 and L4. The third crossbar switch 2C is connected to the fourth crossbar switch 2D by buses L5 and L6.

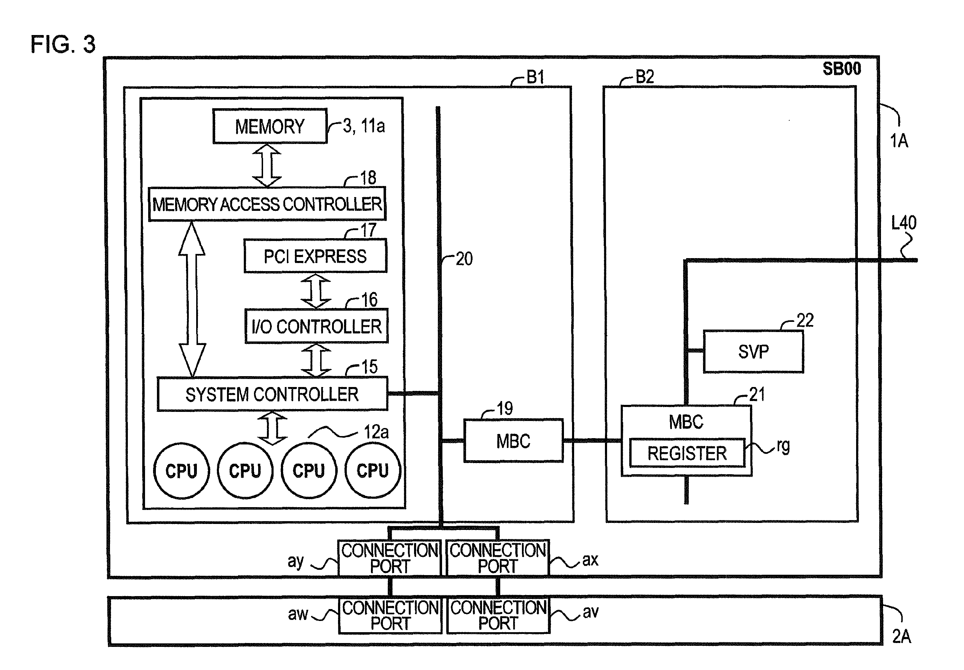

The system boards 1A to 1P also include system control devices (depicted in FIG. 3). System control devices V1 to V4 of the crossbar switch boxes 2AB to 2DB and system control devices 22 of the system boards 1A to 1P in the information processing system 1 are connected to each other by an internal bus L40. In FIG. 2, the information processing system 1 includes the sixteen system boards 1A to 1P and the four crossbar switches 2A to 2D. However, the number of system boards and the number of crossbar switches are not limited to sixteen and four. The configuration of the system boards 1A to 1P is explained below.

### [Configuration of the system boards]

FIG. 3 is a diagram for explaining an example of the configuration of the system boards 1A to 1P depicted in FIG. 2. In the example depicted in FIG. 3, the configuration of the system board 1A is explained. The configuration of the other system boards 1B to 1P is the same as the configuration of the system board 1A. As depicted in FIG. 3, the system board 1A includes a system board unit B1 and a service processor board B2.

The system board unit B1 includes, for example, the plurality of CPUs (CPU chips) 12a, a system controller 15, an I/O controller 16, a peripheral component interconnect (PCI) Express 17, a memory access controller 18, the memories 3 and 11a, and a maintenance bus controller (hereinafter referred to as MBC) 19. The memories 3 and 11a are for example, dynamic random access memories (DRAMs). The MBC 19 controls a communication path to the service processor board B2.

The CPUs 12a are arithmetic processing devices that execute the applications pa and pb explained with reference to FIG. 1. The CPUs 12a are connected to the system controller 15. The system controller 15 is connected to the memory access controller 18 connected to the memories 3 and 11a. The system controller 15 is connected to the I/O controller 16. The I/O controller 16 is connected to the PCI express 17 to which, for example, an external memory (a large capacity memory and/or a storage device) and a network interface card (NIC) are connected.

The system controller 15 performs transfer control between the CPUs 12a and the memory access controller 18. The system controller 15 is connected to the crossbar switch 2A via the connection ports ax and ay and performs transfer control between the crossbar switch 2A and the CPUs 12a and transfer control between the crossbar switch 2A and the memory access controller 18. For example, the system controller 15 plays a role of a bridge circuit.

In FIG. 1, as explained above, a part of the regions of the memories 3 and 11a is shared via the crossbar switch 2A and used as the shared memory 3 (FIG. 1). The other part of the regions is used as the local memory 11a. For example, when the CPUs 12a access a region of the shared memory 3 mounted on another system board, the system controller 15 is connected to the crossbar switch 2A via the connection ports ax and ay. On the other hand, when the CPUs 12a access a region of the memories 3 and 11a mounted on the system board 1A, the system controller 15 accesses the memory access controller 18.

The service processor board B2 includes the system control device 22 and a maintenance bus controller (hereinafter referred to as MBC) 21. The system control device 22 performs control such as access control to hardware in a node, monitoring, power-on, collection of a log, and user interface control (user I/F). The MBC 21 controls a communication path to the system board unit B1. The MBC 21 includes a register rg that stores interrupt factors that occur in hardware such as the CPUs 12a, the memories 3 and 11a, the I/O controller 16, and the system control device 22. As explained above with reference to FIG. 2, the system control device 22 is connected to the system control devices 22 and V1 to V4 of the other nodes via a network line L40 such as a local area network (LAN).

In the example depicted in FIG. 3, the system board 1A (1B to 1P) is mounted with the four CPUs (the CPU chips) 12a. However, the system board 1A may be mounted with at least one CPU 12a.

A specific example of the register rg explained with reference to FIG. 3 is explained below.

### [Register]

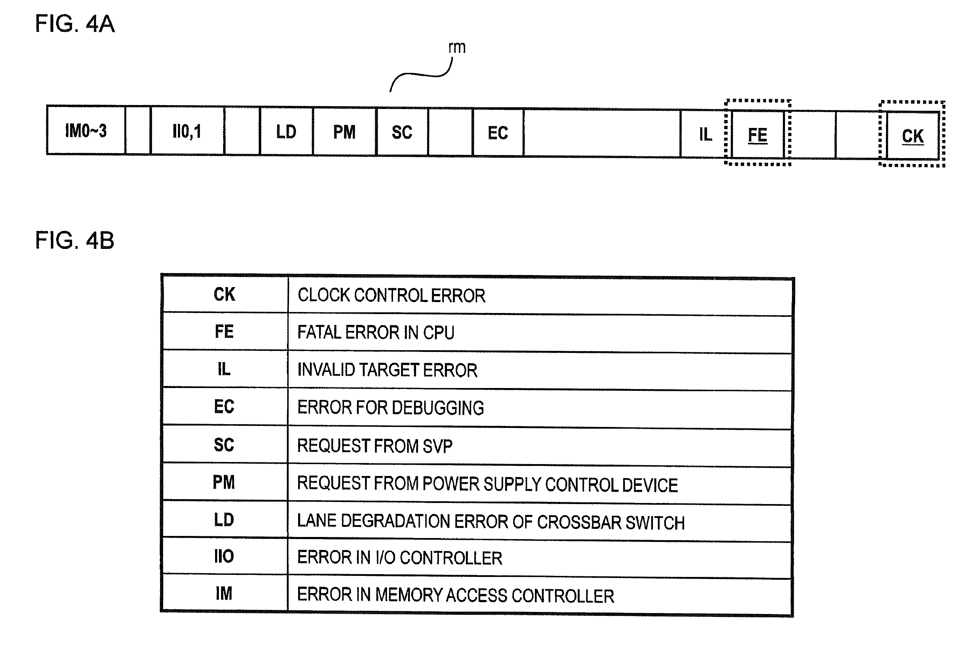

FIGS. 4A and 4B are diagrams for explaining the register rg depicted in FIG. 3. FIG. 4A is a diagram depicting an example of a register map rm of a processor. FIG. 4B is an explanatory diagram of respective interrupt factors. As depicted in FIG. 3, the MBCs 21 of the service processor boards B2 of the nodes includes the registers rg. The register rg stores interrupt factors that occur in a plurality of functional circuits (which indicates the CPUs, the memory access controller, the power supply, and the like; hereinafter referred to as hardware) included in the node. According to the register map rm depicted in FIG. 4A, the register rg stores, for example, interrupt factors CK, FE, IL, EC, SC, PM, LD, IIO, and IM. However, the interrupt factors are not limited to the examples depicted in FIG. 4B. The register rg stores the respective interrupt factors in predetermined bit positions corresponding to the register map rm.

In FIG. 4B, the interrupt factor CK indicates, for example, a clock control error of the system control device 22. The interrupt factor FE indicates a fatal error that occurs in the processor. The interrupt factor IL indicates an error to the effect that a processing target is invalid. The interrupt factor EC indicates a signal used during debugging. The interrupt factor SC indicates a request generated from the system control device 22 and V1 to V4. The interrupt factor PM indicates a request generated from the power supply device. The interrupt factor LD indicates an error related to degradation of a double lane of the crossbar switch 2. The interrupt factor IIO indicates an error that occurs in the I/O controller 16 (FIG. 3). The interrupt factor IM indicates an error that occurs in the memory access controller 18 (FIG. 3).

Processing during failure occurrence is explained below. In this embodiment, the register rg is used in failure occurrence processing explained below.

### [Failure occurrence processing]

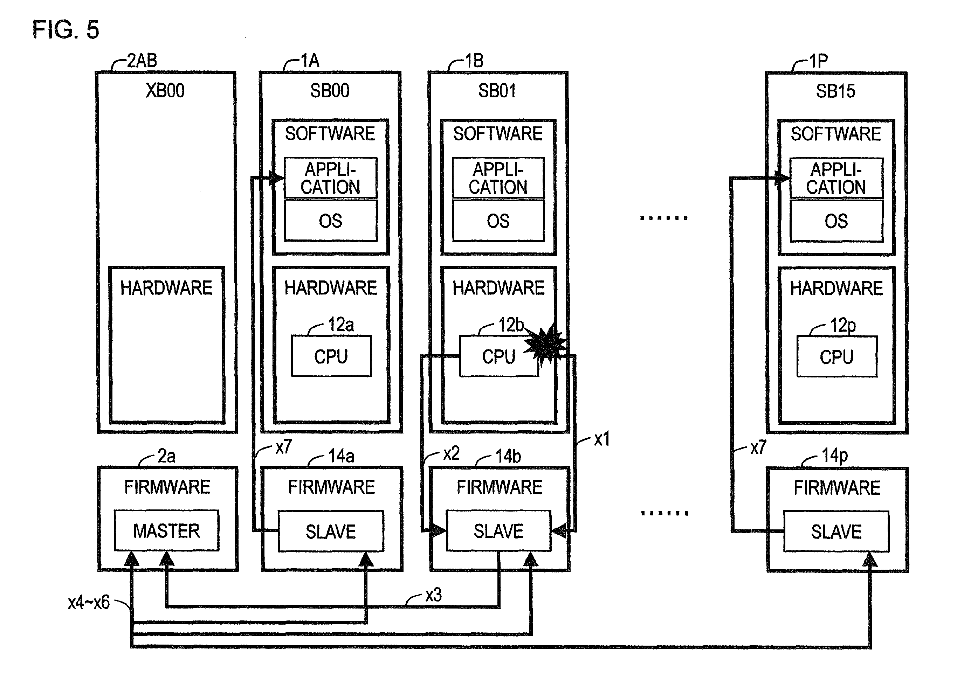

FIG. 5 is a diagram for explaining a flow of processing performed when a failure occurs in a part of the nodes of the information processing system 1 in this embodiment explained with reference to FIGS. 1 to 3. In FIG. 5, components same as the components depicted in FIGS. 2 and 3 are denoted by the same reference numerals and signs.

When a failure analysis of the entire information processing system 1 is performed, it is efficient that one of the plurality of nodes mainly performs the failure analysis. For the efficiency, the information processing system 1 sets the system control device of one node as a master system control device and sets the system control devices of the other nodes as slave system control devices. Alternatively, as a system control device to which the master system control device is switched, the information processing system 1 may set the system control device of another node as a substitute system control device for the master system control device. In an example depicted in FIG. 5, for example, the master system control device is the system control device V1 of one node (2AB in FIG. 2) including the crossbar switch 2 (FIG. 1). In the following explanation, the master system control device V1 is referred to as system control device V1 of a master node 2AB and the slave system control devices 22 are referred to as system control devices 22 and V2 to V4 of slave nodes 1A to 1P and 2BB to 2DB.

As explained above, each of the system control devices 22 and V1 to V4 performs monitoring of states of the hardware in the nodes and control of the hardware. The system control devices 22 and V1 to V4 include the registers rg (FIG. 4B) that store the interrupt factors that occur in the respective kinds of the hardware in the nodes. Examples of a failure of the hardware include data breakage of the memories 3 and 11a and an internal failure of the processor 12a.

When a failure of the hardware occurs, an interrupt signal is generated. An interrupt factor is stored in the registers rg (an arrow x1 depicted in the figure). When the system control devices 22 and V1 to V4 detect the occurrence of the failure of the hardware by monitoring the registers rg, the system control devices 22 and V1 to V4 notify the system control device V1 of the master node 2AB of the occurrence of the interrupt factor (arrows x2 and x3 depicted in the figure). When the system control device V1 of the master node 2AB receives the notification of the occurrence of the interrupt factor, the system control device V1 instructs the system control devices 22 and V2 to V4 of the slave nodes 1A to 1P and 2BB to 2DB to transmit log information including error information of the hardware (an arrow x4 depicted in the figure). The system control devices 22 and V2 to V4 of the slave nodes 1A to 1P and 2BB to 2DB collect log information in the nodes and transmit the log information to the system control device V1 of the master node 2AB according to the instruction received from the system control device V1 of the master node 2AB (an arrow x5 depicted in the figure). The log information acquired in the nodes is collected in the system control device V1 of the master node 2AB.

Subsequently, the system control device V1 of the master node 2AB performs analysis processing for the log information. For example, the system control device V1 specifies the fail node 1B and a failed component in the fail node 1B on the basis of the log information of the nodes. The system control device V1 performs reaction to the failure on the basis of the information specified by the analysis processing for the log information (arrows x6 and x7 depicted in the figure). The reaction is, for example, suppression of access to a region of the shared memory 3 of the fail node 1B by the applications operating in the nodes and stop control for the hardware of the fail node 1B.

As explained with reference to FIG. 5, when a failure occurs in a part of the nodes, the system control device V1 of the master node 2AB receives the log information collected in the nodes. The system control device V1 of the master node 2AB analyzes the acquired log information of the nodes to thereby perform the reaction to the failure after processing for specifying the fail node and a circuit in which the failure occurs.

### [Analysis of the log information]

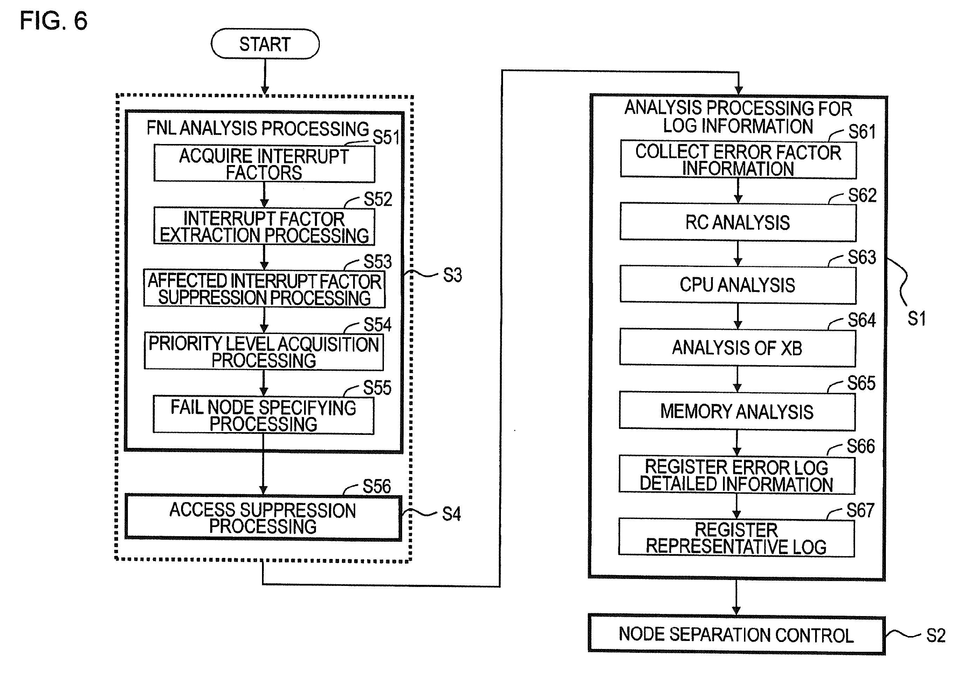

FIG. 6 is a diagram for explaining an overview of analysis processing for the log information (S1) in the system control device V1 of the master node 2AB explained with reference to FIG. 5. In FIG. 6, steps S3 and S4 surrounded by a dotted line are processing added in this embodiment.

First, the analysis processing for the log information (S1) is explained. When a failure occurs, even if a continued operation of the nodes is possible, the information processing system 1 needs to specify content of the failure to perform preventive maintenance of the nodes. The information processing system 1 needs to specify an application specific integrated circuit (hereinafter referred to as ASIC) portion in which the failure occurs. For example, to specify the ASIC portion in which the failure occurs and determine possibility of a continued operation of the nodes, the system control device V1 of the master node 2AB performs the analysis processing for the log information. In this embodiment, the ASIC corresponds to, for example, the CPU, the memory access controller, and the I/O controller.

The system control device V1 of the master node 2AB performs a log analysis on the basis of the collected log information (S1). The log information is, for example, error factor information including error information during the interrupt factor occurrence and error log detailed information. The error log detailed information is, for example, history information of the ASIC and dump information. Since a data amount of the error log detailed information is enormous, the system control device V1 of the master node 2AB receives the error log detailed information in parallel to analysis steps S61 to S65 in the log information (S1).

Analysis steps in step S1 are explained. First, the system control device V1 performs analysis processing for an error code on the basis of the error factor information (S61). Subsequently, the system control device V1 performs determination of presence or absence and specifying processing for a failed portion on the basis of the error factor information targeting each of the nodes and the hardware (S62 to S65). The system control device V1 performs determination of a failed portion in the respective kinds of hardware and determination processing for details of the failed portion on the basis of the error factor information targeting, for example, the CPU 12a, the crossbar switch 2, and the memories 3 and 11a. According to the processing in steps S62 to S65, a fail node and a circuit in which the failure occurs are specified.

It is confirmed that the other circuits are normally operating. In an example depicted in FIG. 6, the system control device V1 performs the analysis processing targeting the CPU 12a, the crossbar switch 2, and the memories 3 and 11a. However, target hardware is not limited to this example.

When the fail node and the failed portion are specified, the system control device V1 stands by for completion of the collection of the error log detailed information and performs registration processing for the error log detailed information (S66). Subsequently, the system control device V1 performs registration processing for a representative log indicating the log information corresponding to the failed portion on the basis of the error factor information (S67). The error log detailed information and the representative log are information needed for an analysis of a cause of the failure and restoration from the failure. When the analysis processing based on the log information is completed, the system control device V1 performs separation control for the fail node from the information processing system 1 according to the importance of the failure (S2). The separation control for the fail node indicates, for example, a power supply stop to the hardware of the fail node.

The system control device V1 of the master node 2AB executes the analysis processing for the log information (S1) irrespective of the importance of the failure. In the analysis processing for the log information, the system control device V1 performs the determination processing for the failed portion in detail targeting the respective kinds of hardware in the nodes. Therefore, the analysis processing takes time. Since a data amount of the error log detailed information is enormous, transfer processing for the error log detailed information takes time. Therefore, the analysis processing for the log information takes about several ten seconds to several minutes (30 seconds to 5 minutes). That is, time of about 5 minutes is consumed from the occurrence of the failure to the separation control for the fail node.

However, it is desirable that the information processing system 1 resumes the operation in a short time after the failure occurs. In resumption processing for the operation, a normal node takes over processing of the fail node. Therefore, the information processing system 1 needs to quickly specify the fail node. In the information processing system 1 in which the memory is shared among the plurality of nodes, it is likely that a secondary failure such as breakage, nonconformity, or the like of the shared memory 3 occurs because of the occurrence of the failure. In order to suppress the secondary failure of the shared memory 3, suppression of access to the memory of the fail node needs to be quickly performed. It is desirable to complete the suppression of access to the memory of the fail node, for example, in about one second after the occurrence of the failure.

Therefore, in this embodiment, before the analysis processing for the log information (S1), the system control device V1 of the master node 2AB performs fail node list (hereinafter referred to as FNL) analysis processing (S3) to specify a fail node and performs suppression of access to the memory of the fail node (S4).

The system control device V1 of the master node 2AB in this embodiment receives the interrupt factors of the register rg according to occurrence of an interrupt factor in the other nodes and extracts an interrupt factor to be detected as a failure among the interrupt factors. The system control device V1 of the master node 2AB specifies a fail node according to an extraction result and, after suppressing access to the memory of the fail node, performs separation control for the fail node on the basis of log information received from the other nodes.

Specifically, in the FNL analysis processing (S3), first, the system control device V1 of the master node 2AB acquires occurred interrupt factors from the nodes (S51). Subsequently, the system control device V1 extracts interrupt factors to be detected as the failure among the acquired interrupt factors (S52). The system control device V1 excludes, from targets of an FNL analysis, affected interrupt factors among the extracted interrupt factors (S53). That is, the system control device V1 excludes, from the targets of the FNL analysis processing, interrupt factors that occur because of other interrupt factors among the extracted interrupt factors.

Subsequently, when a plurality of interrupt factors are extracted, the system control device V1 determines priority levels of the interrupt factors (S54). The system control device V1 selects the interrupt factors in order from the interrupt factor having the highest priority level and specifies a fail node corresponding to the interrupt factors (S55). The system control device V1 performs processing for suppressing access to the memory of the fail node from the other nodes (S56). That is, the system control device V1 suppresses access to a region of the shared memory 3 of the fail node. Details of the steps are explained below. Subsequently, the system control device V1 executes the analysis processing for the log information (S1) and performs the separation control for the fail node from the information processing system 1 (S2).

As explained with reference to FIG. 6, in this embodiment, in the FNL analysis processing (S3), the system control device V1 specifies a fail node on the basis of the interrupt factor instead of the log information and performs the processing for suppressing access to the memory of the fail node from the other node (S56 in FIG. 6). By suppressing the access to the memory of the fail node, the system control device V1 quickly suppresses a secondary failure of the shared memory 3 and reduces the influence on the other nodes by the fail node during the failure occurrence.

After suppressing the access to the memory of the fail node, the system control device V1 performs the analysis processing for the log information (S1), specifies an ASIC portion in which the failure occurs, and determines possibility of a continuous operation of the node. The system control device V1 performs the separation control for the fail node from the information processing system 1 (S2) on the basis of a result of the analysis processing for the log information.

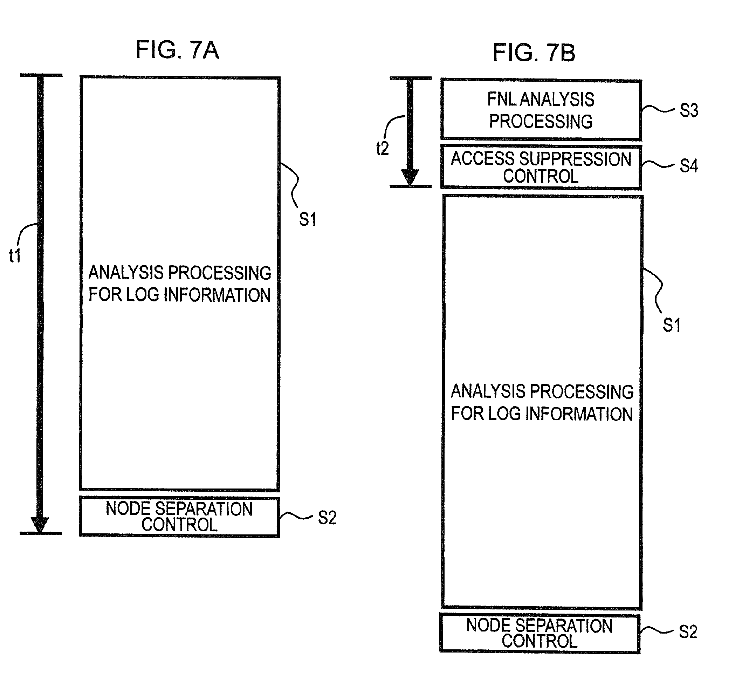

FIGS. 7A and 7B are diagrams illustrating time consumed by the analysis processing for the log information in FIG. 6 (S1 in FIG. 6) and the FNL analysis processing (S3). FIG. 7A is a diagram depicting time from the analysis processing for the log information (S1) to the separation control for the fail node (S2). FIG. 7B is a diagram depicting time from the FNL analysis processing (S3) to the processing for suppressing access to the memory of the fail node (S4).

In FIG. 7A, after the analysis processing for the log information (S1), the separation control for the fail node (S2) is performed. As explained above, the analysis processing for the log information (S1) consumes time according to the analysis processing for the log information and the transfer processing for the error log detailed information for the respective kinds of hardware. As depicted in FIG. 7A, time indicated by a period t1 is consumed from the failure occurrence to the separation control for the fail node.

On the other hand, in FIG. 7B, in the FNL analysis processing (S3), the system control device V1 specifies a fail node on the basis of an interrupt factor to be detected as the failure. In the FNL analysis processing (S3), transfer of the error log detailed information is not needed and a data amount of the interrupt factor (about 32 bits) is small. Therefore, the system control device V1 is capable of quickly specifying the fail node. Consequently, as depicted in FIG. 7B, time t2 from the failure occurrence to the processing for suppressing access to the memory of the fail node is greatly reduced from time t1.

A software module diagram of the system control device V1 of the master node 2AB and the system control devices 22 and V2 to V4 of the slave nodes 1A to 1P and 2BB to 2DB in this embodiment is explained.

### [Software module diagram]

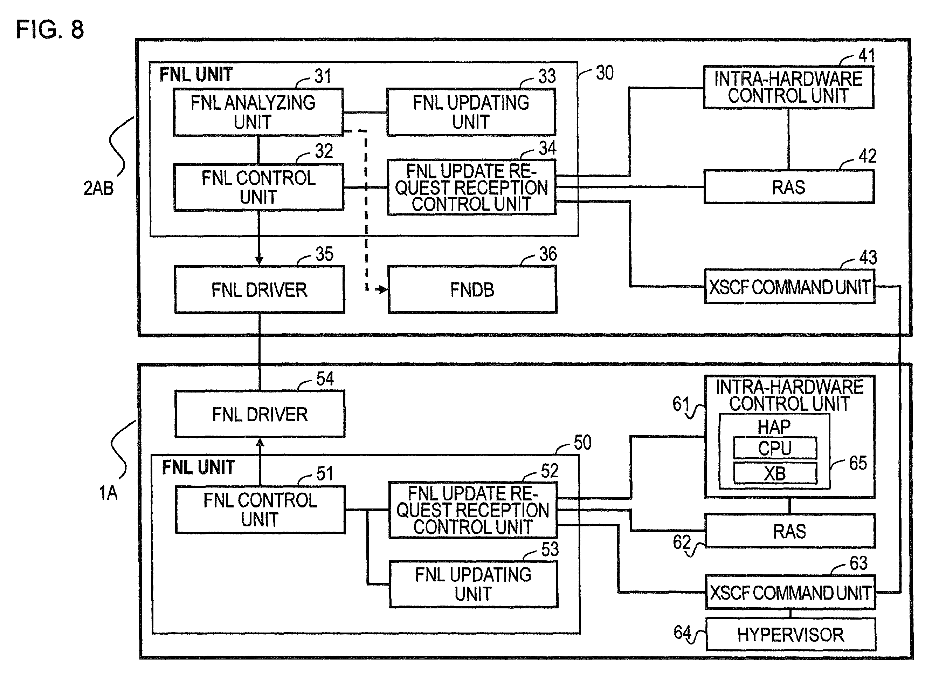

FIG. 8 is a software module diagram of the nodes of the information processing system in this embodiment. FIG. 8 includes a block diagram of the system control device V1 of the master node 2AB and the system control devices 22 and V2 to V4 of the slave nodes 1A to 1P and 2BB to 2DB. First, a block of the system control devices 22 and V2 to V4 of the slave nodes 1A to 1P and 2BB to 2DB is explained. The system control device 22 of the slave node 1A is explained.

In FIG. 8, the system control device 22 of the slave node 1A includes, for example, an FNL driver 54, an FNL unit 50, an intra-hardware control unit 61, reliability availability serviceability (hereinafter referred to as RAS) 62, an extended system control facility (hereinafter referred to as EXCF) command unit 63, and a hypervisor 64. The FNL unit 50 includes, for example, an FNL control unit 51, an FNL update request reception control unit 52, and an FNL updating unit 53.

The intra-hardware control unit 61 includes, for example, a hardware access program (hereinafter referred to as HAP) 65 for performing access processing for hardware such as a power supply, a processor (in FIG. 8, written as CPU), and a crossbar switch (in FIG. 8, written as XB). The intra-hardware control unit 61 detects occurrence of an interrupt factor in access processing to the hardware and notifies the FNL update request reception control unit 52 of the FNL unit 50 of the occurrence of the interrupt factor. The RAS 62 detects occurrence of an interrupt factor in the ASIC and notifies the FNL update request reception control unit 52 of the occurrence of the interrupt factor. An XSCF command unit 43 detects, for example, occurrence of the interrupt factor in the hypervisor and notifies the FNL update request reception control unit 52 of the occurrence of the interrupt factor.

The FNL update request reception control unit 52 acquires the notifications of the occurrence of the interrupt factors from the units and outputs the notifications to the FNL control unit 51. The FNL control unit 51 notifies the FNL control unit 32 of the system control device V1 of the master node 2AB of the occurrence of the interrupt factors via the FNL driver 54. The FNL control unit 51 collects the occurred interrupt factors and transmits the interrupt factors to the system control device V1 of the master node 2AB via the FNL driver 54 in response to a collection request for the interrupt factors from the system control device V1 of the master node 2AB. The FNL updating unit 53 updates a fail node list (FNL; not depicted in FIG. 8) on the basis of an FNL update instruction from the system control device V1 of the master node 2AB. The FNL is a list for managing possibility of access processing to the respective nodes that share the memory. The nodes in the information processing system 1 detect an access suppression target node on the basis of the FNL.

In FIG. 8, the system control device V1 of the master node 2AB includes, for example, an FNL driver 35, an FNL unit 30, an XSCF command unit 43, an intra-hardware control unit 41, an RAS 42, a fail node DB (hereinafter referred to as FNDB) 36. The FNL unit 30 includes, for example, an FNL analyzing unit 31, an FNL control unit 32, an FNL updating unit 33, and an FNL update request reception control unit 34. Processing by the intra-hardware control unit 41, the RAS 42, the XSCF command unit 43, and the FNL update request reception control unit 34 is the same as the processing in the system control device 22 of the slave node 1A.

When the FNL control unit 32 of the FNL unit 30 receives the notification of the occurrence of the interrupt factor from the system control device 22 of the slave node 1A, the FNL control unit 32 instructs, via the FNL driver 35, the system control devices 22 of the slave nodes to collect the occurred interrupt factors. The FNL analyzing unit 31 specifies a fail node referring to the FNDB 36 on the basis of the interrupt factors collected from the system control devices 22 of the nodes. The FNDB 36 is a file having a definition of an analysis logic in an FNL analysis. The FNL analyzing unit 31 instructs, on the basis of information concerning the specified fail node, the FNL updating units 33 of the nodes to update the FNL.

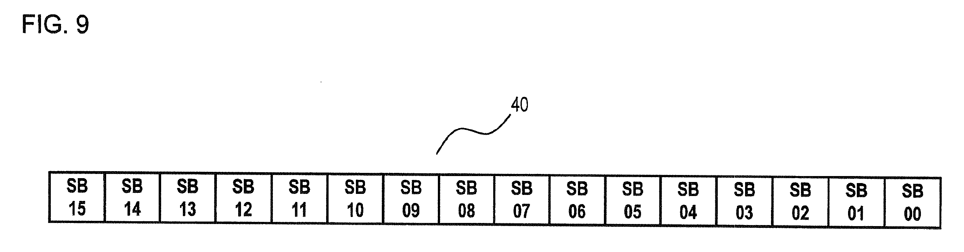

FIG. 9 is a diagram of an example of the file node list (FNL) 40 explained with reference to FIG. 8. In the example depicted in FIG. 9, the information processing system 1 includes, for example, as depicted in FIG. 2, sixteen nodes SB00 to SB15. The nodes share the memory. Therefore, the FNL 40 depicted in FIG. 9 includes values for managing possibility of access processing to the respective sixteen nodes. For example, a value "0" indicates that access to the shared memory 3 of a target node is permitted. On the other hand, a value "1" indicates that access to the shared memory 3 of the target node is suppressed.

A flow of processing until the FNL 40 explained with reference to FIG. 9 is updated after an interrupt factor occurs is explained in time series according to the software module explained with reference to FIG. 8.

### [Flow of processing of the software module]

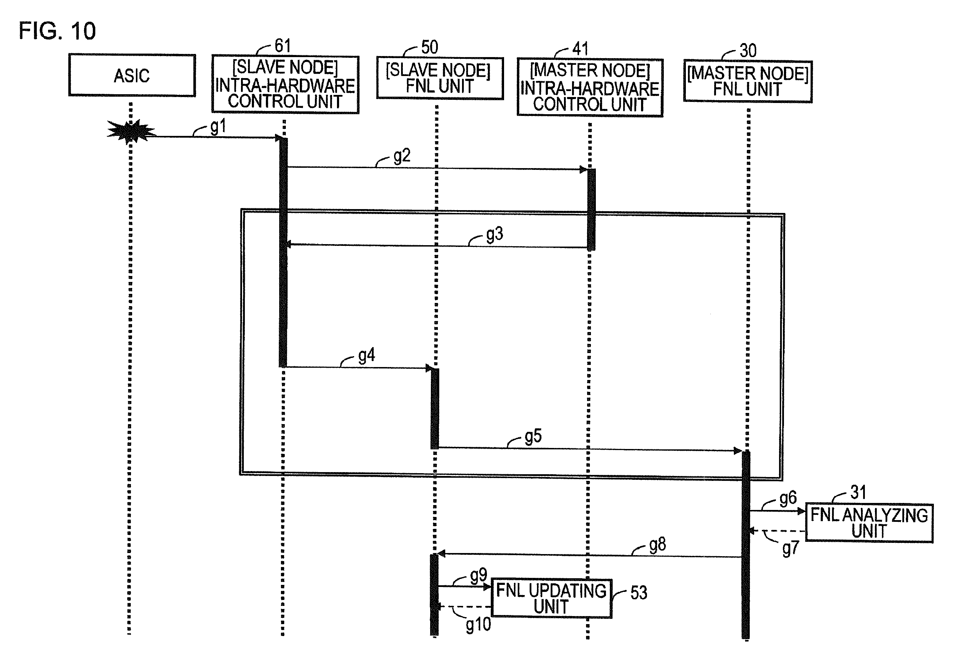

FIG. 10 is a diagram for explaining, in time series, a flow of processing in the system control device V1 of the master node 2AB and the system control device 22 of the slave node 1A performed while an interrupt factor occurs and the FNL is updated. In FIG. 10, components same as the components depicted in FIG. 8 are denoted by the same reference numeral.

In an example depicted in FIG. 10, for example, a failure occurs in the ASIC of a part of the slave nodes. An interrupt signal is generated because of the occurrence of the failure. An interrupt factor corresponding to hardware in which the failure occurs is registered in the register rg. When the system control device 22 of the slave node 1A detects the occurrence of the failure (an arrow g1 depicted in the figure), the system control device 22 notifies the intra-hardware control unit 41 in the system control device V1 of the master node 2AB of the occurrence of the failure (an arrow g2 depicted in the figure).

The intra-hardware control unit 41 in the system control device V1 receives the notification of the occurrence of the failure and instructs the system control devices 22 of the slave nodes to collect interrupt factors (an arrow g3 depicted in the figure). In response to the notification of the system control device V1 of the master node 2AB, the system control devices 22 of the slave nodes transmit occurred interrupt factors to the FNL unit 30 of the system control device V1 (an arrow g5 depicted in the figure) via the FNL unit 50 (an arrow g4 depicted in the figure).

As a result, the interrupt factors of the system control devices 22 of the slave nodes are collected. A data amount of the interrupt factors is small. Therefore, the system control device V1 can acquire the interrupt factors of the system control devices 22 of the slave nodes in a short time. When the system control devices 22 and the system control devices V1 to V4 are connected via high speed communication, the system control device V1 can further acquire interrupt factors of the system control devices 22 and the system control devices V2 to V4 at high speed.

When the FNL unit 30 in the system control device V1 of the master node 2AB collects interrupt factors in all the slave nodes, the FNL unit 30 instructs the FNL analyzing unit 31 to perform analysis processing (an arrow g6 depicted in the figure). The FNL analyzing unit 31 specifies a fail node on the basis of the collected interrupt factors and outputs the fail node to the FNL unit 30 (an arrow g7 depicted in the figure). Subsequently, the FNL unit 30 instructs, on the basis of information concerning the fail node, the FNL units 50 of the system control devices of the slave nodes 1A to update the FNL 40 (FIG. 9) (an arrow g8 depicted in the figure). When the FNL unit 50 of the slave node 1A receives the update instruction of the FNL 40, the FNL unit 50 causes the FNL updating unit 53 to execute the update of the FNL 40 (g9 and g10).

The FNL analysis processing and the update processing for the FNL are performed on the basis of the flow of the processing depicted in the flowchart of FIG. 10. Details of the respective kinds of processing are explained on the basis of the flowchart.

### [FNL analysis processing and FNL update processing]

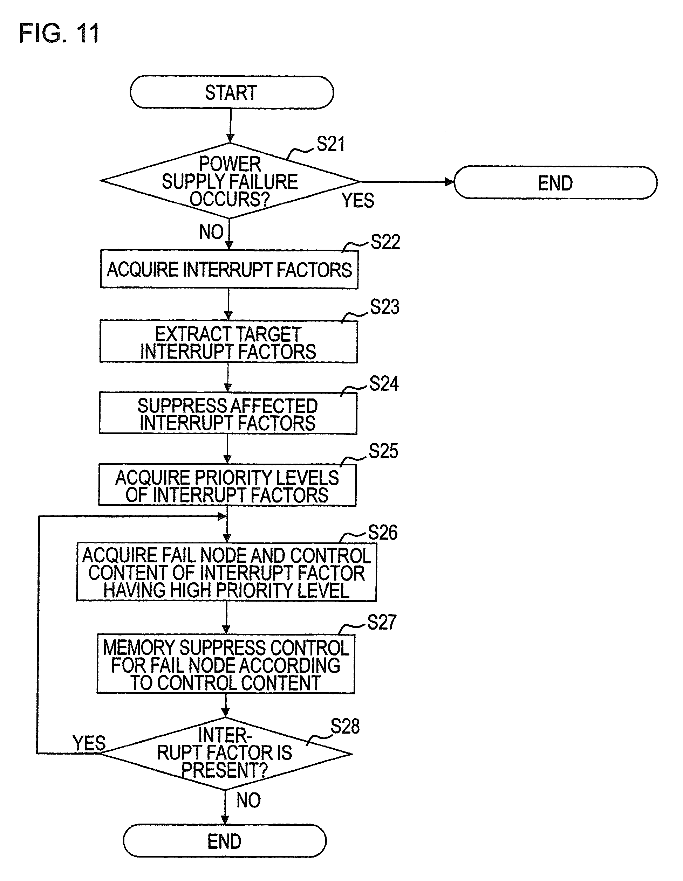

FIG. 11 is a flowchart for explaining the processing of the FNL analyzing unit 31 and the processing of the FNL updating unit 33 in this embodiment depicted in FIG. 8. First, for example, the FNL analyzing unit 31 in the system control device V1 of the master node 2AB determines whether a power supply failure occurs (S21). When the power supply failure occurs, since measures against the power supply failure is given priority, the FNL analyzing unit 31 ends the processing.

On the other hand, when a power supply failure does not occur (NO in S21), the FNL analyzing unit 31 acquires interrupt factors (S22). As explained above, the FNL analyzing unit 31 acquires interrupt factors from the nodes in response to the notification from the node in which the interrupt factor occurs. Subsequently, the FNL analyzing unit 31 extracts interrupt factors to be detected as a failure from the collected interrupt factors (S23). For example, the FNL analyzing unit 31 extracts, for example, interrupt factors corresponding to failures in which the nodes need to be stopped among the interrupt factors. That is, the FNL analyzing unit 31 does not extract interrupt factors in which the nodes can continue to operate.

In this embodiment, the system control device V1 of the master node 2AB extracts, for example, among the interrupt factors illustrated in FIG. 4, the interrupt factors CK and FE as interrupt factors to be detected as a failure (S23). This is because the interrupt factors CK and FE are failure factors in which the CPU stops and the interrupt factors other than the interrupt factors CK and FE are failure factors in which a part of functions is degraded. However, the system control device V1 is not limited to this example and may extract other interrupt factors as the interrupt factors to be detected as the failure.

The register map rm depicted in FIG. 4 is a register map of the processor. In the information processing system 1, besides the register map of the processor, a register map for the crossbar switch and a register map for the MBC are present. As interrupt factors stored in a register for the crossbar switch, for example, among the plurality of interrupt factors, interrupt factors corresponding to an internal failure and a port failure are extracted. As interrupt factors stored in a register for the MBC, for example, among the plurality of interrupt factors, the interrupt factor FE is extracted.

Subsequently, the FNL analyzing unit 31 suppresses affected interrupt factors (S24). The interrupt factors are classified into affecting interrupt factors and affected interrupt factors induced on the basis of the affecting interrupt factors. The FNL analyzing unit 31 excludes the affected interrupt factors and narrows down the interrupt factors to only the affecting interrupt factors.

Specifically, for example, when a failure occurs in the processor of a certain node, the failure sometimes affects a connecting section of the crossbar switch in the same node and other portions of the processor. In this case, interrupt factors corresponding to a failure that occurs in the processor are equivalent to high-order interrupt factors. An interrupt factor corresponding to failures that occur in the connecting section of the crossbar switch and the other portions of the processor are equivalent to low-order interrupt factors. That is, the high-order interrupt factors correspond to the affecting interrupt factors and the low-order interrupt factors corresponds to the affected interrupt factors.

In order to exclude the affected interrupt factors from targets of the FNL analysis according to the suppression processing for the affected interrupted factors (S24), the FNL analyzing unit 31 specifies only nodes corresponding to the affecting interrupt factors as fail nodes. That is, the FNL analyzing unit 31 avoids specifying nodes corresponding to the affected interrupt factors as fail nodes and specifies only nodes in which failures actually occurs as fail nodes.

Subsequently, the FNL analyzing unit 31 acquires priority levels of the respective extracted interrupt factors (S25). The FNL analyzing unit 31 specifies, in order from the interrupt factor having the highest priority level, a fail node corresponding to the interrupt factor and acquires control content for the fail node (S26). The FNL updating units 33 and 53 update the FNL 40 on the basis of the acquired control content and suppress access to a region of the fail node on the shared memory 3 from the other nodes (S27). Subsequently, the FNL analyzing unit 31 and the FNL updating units 33 and 53 perform processing in steps S26 and S27 targeting the interrupt factor having the next highest priority level. After performing the processing in steps S26 and S27 targeting all the extracted interrupt factors, the FNL analyzing unit 31 and the FNL updating units 33 and 53 end the analysis processing for the FNL and the update processing for the FNL.

Details of the suppression processing for the affected interrupt factors (step S24) in the flowchart of FIG. 11 are explained.

### [Suppression of the affected interrupt factors (step S24 in FIG. 11)]

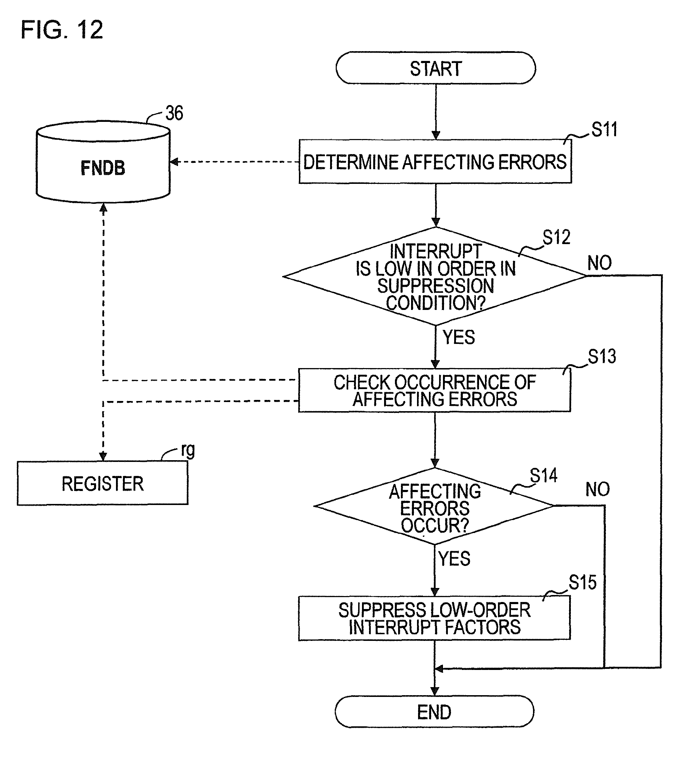

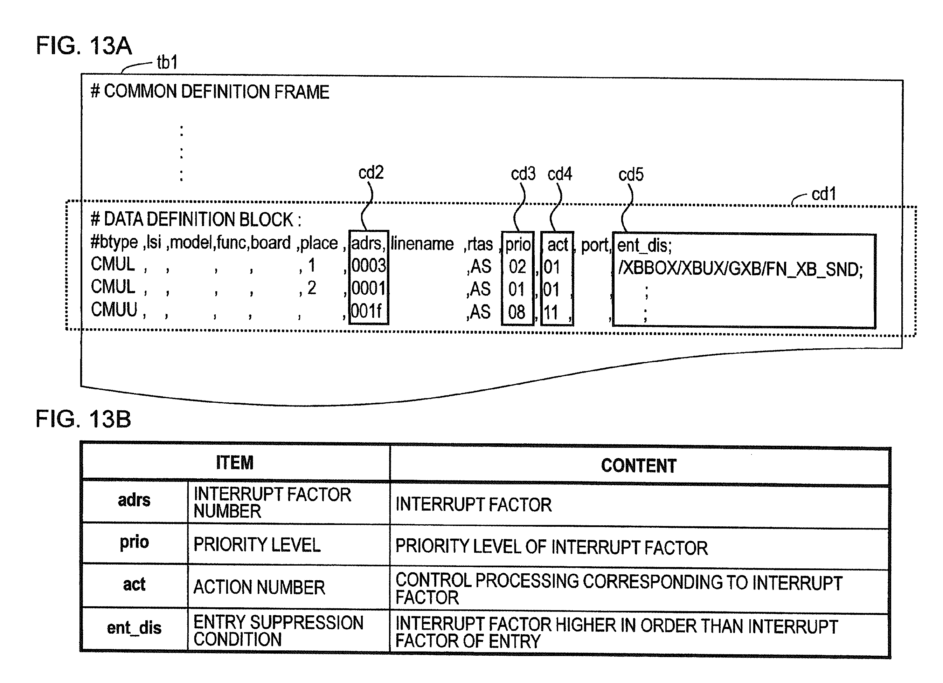

FIG. 12 is a flowchart for explaining the suppression processing for the affected interrupt factors. First, the FNL analyzing unit 31 refers to the FNDB 36 and determines whether the extracted interrupt factors (in this example, CK and FE) are the affecting interrupt factors (S11). The FNDB 36 is explained below with reference to FIGS. 13A and 13B. When the extracted interrupt factors are not the low-order interrupt factors (the affected interrupt factors) (No in S12), that is, the extracted interrupt factors are the affecting interrupt factors, the FNL analyzing unit 31 ends the negation processing for the affected interrupt factors.

On the other hand, when the extracted interrupt factors are the low-order interrupt factors (YES in S12), the FNL analyzing unit 31 refers to the registers rg of the nodes and determines whether the affecting interrupt factors indicating the high-order interrupt factors corresponding to the low-order interrupt factors occur (S13). When the affecting interrupt factors occur (YES in S14), the FNL analyzing unit 31 suppresses the low-order interrupt factors and excludes the low-order interrupt factors from targets of the FNL analysis processing (S15).

On the other hand, when the affecting interrupt factors do not occur (NO in S14), the FNL analyzing unit 31 ends the suppression processing for the affected interrupt factors. That is, for example, even if occurred interrupt factors are the affected interrupt factors, when the affecting interrupt factors do not occur, the FNL analyzing unit 31 does not suppress the affected interrupt factors.

As explained above with reference to FIGS. 4A, 4B and 12, in this embodiment, the FNL analyzing unit 31 performs the FNL analysis limitedly for the interrupt factors corresponding to the failures in which the nodes need to be stopped among the interrupt factors (S23 in FIG. 11). The FNL analyzing unit 31 further performs the FNL analysis limitedly for the affecting interrupt sources (S24 in FIG. 11). Therefore, the FNL analyzing unit 31 can extract the interrupt factors corresponding to the failures in which the nodes need to be stopped, which are the interrupt factors in the nodes in which failures actually occurs. That is, the FNL analyzing unit 31 can efficiently specify minimum fail nodes that need to be stopped.

A specific example of the FNDB 36 referred to by the FNL analyzing unit 31 in the FNL analyzing processing is explained. The FNDB 36 has a definition of an analysis logic in the FNL analysis.

### [Specific example of the FNDB]

FIGS. 13A and 13B are diagrams depicting a specific example of the FNDB 36. FIG. 13A is a diagram depicting a definition table tb1 for defining an analysis logic in the FNL analysis. FIG. 13B is a diagram for explaining a part of entries described in the definition table tb1. The definition table tb1 includes, for example, a common definition frame and a data definition block. The common definition frame includes a version number of the definition table tb1 and a declaration of a definition start.

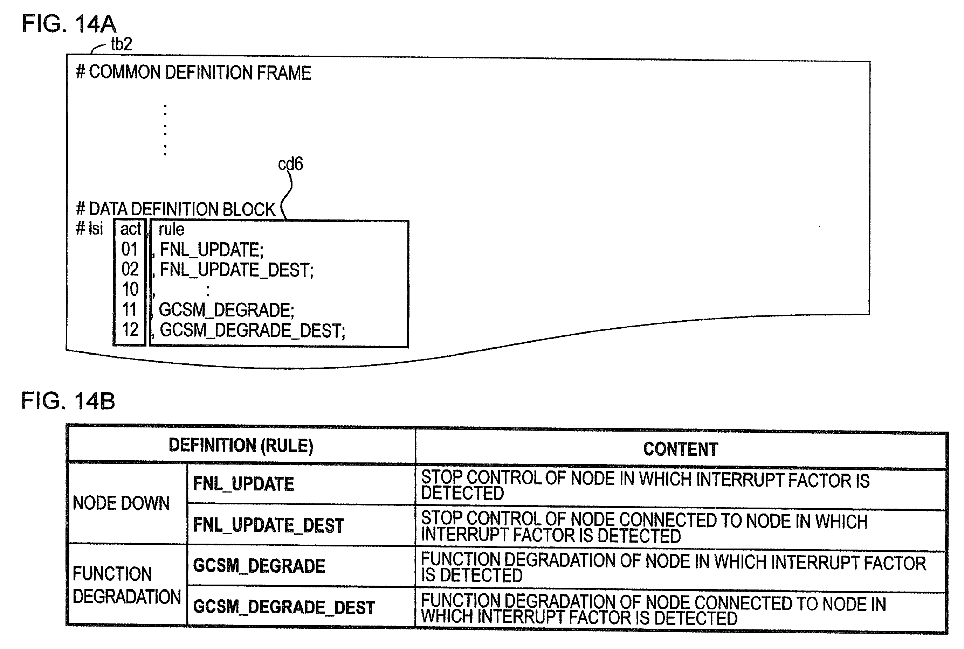

According to FIG. 13A, the definition table tb1 includes definitions of a priority level (prio), an action number (act), an entry suppression condition (ent_dis), and the like corresponding to an interrupt factor. According to FIG. 13B, the priority level (prio) indicates a priority level of the interrupt factor. For example, the priority level is indicated by a numerical value. The action number (act) indicates a type of processing for suppressing access to a fail node and a shared memory corresponding to the interrupt factor. Details of types of the access suppression processing are explained below with reference to FIGS. 14A and 14B.

The entry suppression condition (ent_dis) indicates an interrupt factor corresponding to the interrupt factor and logically higher in order than the interrupt factor. That is, the entry suppression condition (ent_dis) indicates an affecting interrupt factor corresponding to the interrupt factor. When the entry suppression condition (ent_dis) is blank, this indicates that the affecting interrupt factor corresponding to the interrupt factor is absent.

The FNL analyzing unit 31 refers to a description cd1 of the definition table tb1 depicted in FIG. 13A and performs the suppression processing for the affected interrupt factors (S24 in FIG. 11), the acquisition processing for the priority level (S25 in FIG. 11), and the specifying of the fail node and the acquisition processing of the access suppression processing (S26 in FIG. 11). For example, the FNL analyzing unit 31 refers to an adrs (interrupt factor number) row cd2 in the definition table tb1 and searches for a row in which a value of adrs coincides with an interrupt factor number corresponding to the interrupt factor.

For example, in an example explained below, an interrupt factor collected on the basis of the register rg is the interrupt factor CK. According to the register map rm depicted in FIGS. 4A and 4B, the interrupt factor CK is located in a position of a first bit. Therefore, the interrupt factor number corresponding to the interrupt factor CK is a value "0x00000001". Therefore, the FNL analyzing unit 31 detects definition information in a second row in the definition table tb1 corresponding to the interrupt factor CK. The interrupt factor corresponding to the interrupt factor FE is a value "0x00000003". Therefore, the FNL analyzing unit 31 detects definition information in a first row in the definition table tb1 corresponding to the interrupt factor FE.

Subsequently, the FNL analyzing unit 31 refers to an item cd5 corresponding to the entry suppression condition (ent_dis) in the detected definition condition in the second row. In an example depicted in FIG. 13A, the entry suppression condition (ent_dis) in the definition information in the second row is blank. Therefore, the FNL analyzing unit 31 determines the interrupt factor CK as an affecting interrupt factor (S24 in FIG. 11). The FNL analyzing unit 31 acquires a priority level "0x01" (S25 in FIG. 11) on the basis of an item cd3 of the priority level (prio) in the definition information in the second row and acquires an action number "0x01" on the basis of an item cd4 of the action number (act). The priority level in the example depicted in FIG. 13A is higher as a value is smaller.

On the other hand, the FNL analyzing unit 31 detects definition information in the first row corresponding to the interrupt factor FE. In the example depicted in FIG. 13A, the definition table tb1 includes a description of definitions "/XBBOX/XBUX/GXB/FN_XB_SND" as the entry suppression condition (ent_dis) in the definition information in the first row (cd5). The respective definitions XBBOX, XBUX, GXB, and FN_XB_SND indicate interrupt factors and correspond to affecting interrupt factors of the interrupt factor FE. The definition XBBOX indicates, for example, an interrupt factor in the crossbar box. The definition FN_XB_SND indicates, for example, an interrupt factor in the transmitting unit of the crossbar switch. Therefore, the FNL analyzing unit 31 determines the interrupt factor FE as an affected interrupt factor and excludes the interrupt factor FE from targets of the FNL analysis.

The information processing system is explained on the basis of a specific example. For example, an information processing system in which a plurality of nodes BS00 to SB03 are connected to a node XB00 including the crossbar switch 2 is illustrated. In the specific example, for example, a clock control error is generated in the node SB02 and a port failure occurs in the node XB00 including the crossbar switch 2.

When the system control device V1 of the master node 2AB detects any interrupt factor, the system control device V1 collects interrupt factors that occur in the nodes (S22). The system control device V1 acquires the interrupt factor CK corresponding to the clock control error that occurs in the node SB02 and an interrupt factor corresponding to the port failure that occurs in the node XB00. In the specific example, the interrupt factor CK and the interrupt factor corresponding to the port failure are extraction target interrupt factors (S23). Subsequently, the FNL analyzing unit 31 refers to the FNDB 36 depicted in FIG. 13A and 13B (cd5) and determines whether the interrupt factors are the affecting interrupt factors. As explained above with reference to FIG. 13A, the interrupt factor CK is the affecting interrupt factor. Although not depicted in the figure, in the specific example, the interrupt factor corresponding to the port failure is the affecting interrupt factor. Therefore, the FNL analyzing unit 31 does not suppress the interrupt factor corresponding to the port failure (S24). The FNL analyzing unit 31 refers to the FNDB 36 (cd3) and acquires priority levels corresponding to the interrupt factors (S25). As explained above with reference to FIG. 13A, the priority level (prio) of the interrupt factor CK is the priority level "0x01". In the specific example, although not depicted in the figure, a priority level of the interrupt factor corresponding to the port failure is a priority level "0x05". Therefore, the FNL analyzing unit 31 gives precedence to the interrupt factor CK over the interrupt factor corresponding to the port failure.

Subsequently, the action number (act) of the definition table tb1 depicted in FIG. 13A is explained. The action number (act) indicates a type of processing for suppressing access to a fail node and a shared memory corresponding to an interrupt factor. According to the description cd4 of the definition table tb1 depicted in FIG. 13A, the action number (act) of the interrupt factor CK is "0x01". Although not depicted in the figure, the action number (act) of the interrupt factor corresponding to the port failure is, for example, "0x12". Control information corresponding to the action number (act) is explained with reference to FIGS. 14A and 14B below.

FIGS. 14A and 14B are diagrams depicting a specific example of a definition table tb2 including the action number (act). FIG. 14A is a diagram depicting the definition table tb2 including description of control information (rule) corresponding to the action number (act). FIG. 14B is a diagram for explaining a part of entries of the control information (rule) described in the definition table tb2. The FNDB 36 includes, for example, the definition table tb2 depicted in FIG. 14A in addition to the definition table tb1 depicted in FIG. 13A. The definition table tb2 includes, for example, a common definition frame including a version number of the definition table tb2 and a declaration of a definition start and a data definition block.

The data definition block of the definition table tb2 depicted in FIG. 14A includes a description cd6 of the control information (rule) for a fail node corresponding to the action number (act). For example, the definition table tb2 includes an entry FNL_UPDATE as the control information (rule) corresponding to the action number (act) "0x01". The definition table tb2 includes an entry FNL_UPDATE_DEST as the control information (rule) corresponding to an action number (act) "0x02". Similarly, the definition table tb2 includes an entry GCSM_DEGRADE as the control information (rule) corresponding to an action number (act) "0x11" and includes an entry GCSM_DEGRADE_DEST as the control information (rule) corresponding to an action number (act) "0x12".

According to FIG. 14B, the entry FNL_UPDATE indicates that a node in which an interrupt factor is detected is specified as a fail node and control of memory access is performed with the fail node set as a stop target node. In this case, the system control device V1 of the master node 2AB suppresses access to a region in the shared memory 3 of the node in which the interrupt factor is detected (the fail node) from the other nodes. Since the access is suppressed, the memory of the fail node is separated from the shared memory. It is possible to perform continuous operation of the information processing system. According to FIG. 14B, the entry FNL_UPDATE_DEST indicates that a node connected to the node in which the interrupt factor is detected is specified as a fail node and control of memory access is performed with the fail node set as a stop target node.

Further, the entry GCSM_DEGRADE indicates that the node in which the interrupt factor is detected is specified as a fail node and control of memory access is performed with the fail node set as a function degradation target node. The entry GCSM_DEGRADE_DEST indicates that a node connected to the node in which the interrupt factor is detected is specified as a fail node and control of memory access is performed with the fail node set as a function degradation target node. The function degradation of the fail node indicates, for example, control for degrading the double lines of the crossbar switch depicted in FIG. 2 to a single line when the fail node is a node including the crossbar switch 2.

In the specific example, as explained above, the action number (act) of the interrupt factor CK is the value "0x01" and the action number (act) of the interrupt factor corresponding to the port number is, for example, the value "0x12". Therefore, the FNL analyzing unit 31 specifies the node SB02 in which the interrupt factor occurs corresponding to the interrupt factor CK, as a fail node. The FNL updating units 33 and 53 perform the control (FNL_UPDATE) of a memory access related to the node SB02. The FNL analyzing unit 31 specifies the nodes SB00 to SB03 connected to the node XB00 in which the interrupt factor corresponding to the port failure occurs, as fail nodes. The FNL updating units 33 and 53 perform the function degradation control (GCSM_DEGRADE_DEST) related to the nodes SB00 to SB03.

However, in the specific example, the interrupt factor CK takes precedence over the interrupt factor corresponding to the port failure. Therefore, first, the FNL updating units 33 and 53 perform the processing for suppressing access to the memory of the fail node corresponding to the interrupt factor CK (S26 and S27). For example, the FNL updating units 33 and 53 of the respective nodes update the FNL 40 and suppress access to the memory of the node SB02 from the other nodes.

Subsequently, the FNL updating units 33 and 53 perform the processing for suppressing access to the memories of the nodes SB00 to SB03 according to the interrupt factor corresponding to the port failure (step S26 and S27). For example, the FNL updating units 33 and 53 of the respective nodes update the FNL 40 and degrade the double lines to a line on one side in the access processing from the node XB00 to the nodes SB00 to SB03. Since the lines are degraded, access paths to the shared memory of the nodes SB00 to SB03 decrease.

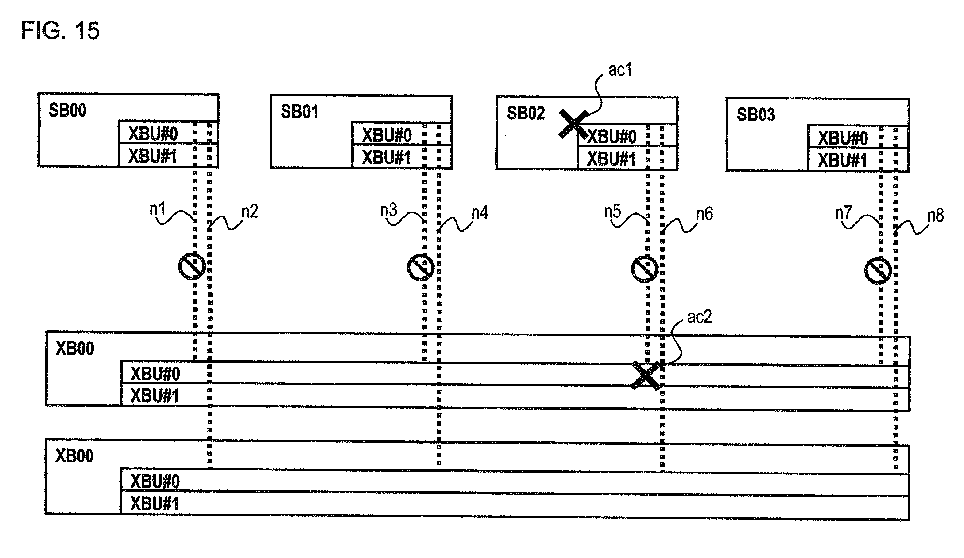

FIG. 15 is a diagram for explaining a suppression range of a memory in the specific example. According to the specific example, when a clock control error occurs in the node SB02, access to the shared memory 3 of the node SB02 by the other nodes is suppressed (ac1). On the other hand, when a port failure occurs in the node XB00, lines between the node XB00 and the nodes SB00 to SB03 are degraded to one side (ac2). That is, in an example depicted in FIG. 15, lines n1, n3, n5, and n7 are unable to be used. For example, when a port failure occurs in a state in which the lines n1, n3, n5, and n7 are already stopped, all the lines n1 to n8 are unable to be used. Access to the shared memory 3 of the nodes SB00 to SB03 is unable to be performed.

As depicted in FIG. 15, a suppression range of access corresponding to the interrupt factor CK is narrower than a suppression range of access due to a port failure of the crossbar switch 2. In the example depicted in FIG. 15, since a priority level of an interrupt factor corresponding to a port failure for which a suppression range of access is wider is set low, access suppression processing due to the port failure is performed later than access suppression processing due to the interrupt factor CK. Since the interrupt for which the suppression range of access is wide is performed later, the performance of the information processing system 1 is maintained for a long time. As in the example depicted in FIG. 15, for example, as a priority level of an interrupt factor, in order to maintain the performance of the system control device 1 higher, a higher priority level is set for an interrupt factor for which a suppression range is smaller.

As explained above, in the information processing system in this embodiment, includes a plurality of nodes and a shared memory connected to the plurality of nodes. Each of the nodes includes a plurality of functional circuits, a control device configured to control the functional circuits; and a register configured to store a plurality of interrupt factors that occur in the plurality of functional circuits. The control device in one node among the plurality of nodes receives the interrupt factor in each register of a plurality of other nodes in response to an occurrence of the interrupt factor of one node among the plurality of other nodes, extracts an interrupt factor to be detected as a failure among the received interrupt factors, specifies a fail node according to an extraction result, and, after suppressing access to the shared memory by the fail node, controls to separate the fail node from the information processing system on basis of log information received from the plurality of other nodes.

The information processing system in this embodiment can specify a fail node at high speed on the basis of interrupt factors. The information processing system in this embodiment specifies a fail node targeting interrupt factors to be detected as a failure for which a stop of the nodes is needed among a plurality of interrupt factors. Therefore, the information processing system can more efficiently specify a fail node.

Since the information processing system in this embodiment can specify a fail node at high speed, the information processing system can quickly suppress access to the memory of the fail node and can avoid a secondary failure of the shared memory. That is, the information processing system can quickly reduce the influence of the fail node on the other nodes during occurrence of a failure. Since the information processing system can specify a fail node at high speed, the information processing system can reduce overhead for switch of operation from the fail node to the normal node during occurrence of a failure.

In the information processing system in this embodiment, the control device of the one node determines whether a second interrupt factor (the affecting interrupt factor), which is a spreading source of an interrupt factor to be detected as the failure, occurs. The control device specifies a node corresponding to the interrupt factor as the fail node when the second interrupt factor does not occur. The control device specifies a node corresponding to the second interrupt factor as the fail node, when the second interrupt factor occurs.

The information processing system in this embodiment specifies a node corresponding to the affecting interrupt factor as a fail node. Therefore, when a plurality of interrupt factors occur in conjunction with one another, the information processing system can specify a fail node corresponding to the affecting interrupt factor targeting only the affecting interrupt factor among the plurality of interrupt factors.

In the information processing system in this embodiment, when the control device of the one node detects a plurality of the interrupt factors to be detected as the failure, the control device suppresses access to the shared memory by the specified fail node on the basis of a priority level of the interrupt factor.

The information processing system in this embodiment controls the order of the processing for suppressing access to the memory of the fail node on the basis of the priority levels of the interrupt factors. Therefore, the information processing system can adjust, according to the interrupt factors, the order of the processing for suppressing access to the memory of the fail node. The information processing system can maintain the performance of the information processing system longer by setting the priority level low for the interrupt factor in which a suppression range of access to the memory is wide.

In the information processing system in this embodiment, when the interrupt factor to be detected as the failure is an interrupt factor that occurs in the node that executes the data processing, the control device of the one node specifies the node where the interrupt factor has occurred as the fail node. When the interrupt factor to be detected as the failure is an interrupt factor that occurs in the node including the network connecting device, the control device specifies a node connected to the network connecting device as the fail node. Therefore, the information processing system in this embodiment can specify a fail node corresponding to the interrupt factor on the basis of the interrupt factor.

In the information processing system in this embodiment, one node includes a definition table including a correspondence relation between the interrupt factor and the interrupt factor which is the spreading source of the interrupt factor. The control device of the one node determines, on the basis of the definition table, whether the interrupt factor, which is the spreading source of the interrupt factor to be detected as the failure, occurs.

The information processing system in this embodiment includes the definition table including the correspondence relation between the interrupt factors and the interrupt factors affecting the interrupt factors. Therefore, the information processing system can determine, at high speed, whether an interrupt factor is an affecting interrupt factor. When the interrupt factors increase or when a change of the interrupt factors occurs, the information processing system can easily apply the increase or the change of the interrupt factors by performing the update processing for the definition table. Consequently, the information processing system can suppress maintenance man-hour during enhancement and a design change.

The information processing system in this embodiment, one node includes a definition table including the priority level corresponding to the interrupt factor. The control device of the one node determines the priority level of the interrupt factor on the basis of the definition table.

The information processing system in this embodiment includes the definition table including the priority levels corresponding to the interrupt factors. Therefore, the information processing system can acquire a priority level of an interrupt factor at high speed. When the interrupt factors increase or when a change of the interrupt factors occurs, the information processing system can easily apply the increase or the change of the interrupt factors by performing the update processing for the definition table. Consequently, the information processing system can suppress maintenance man-hour during enhancement and a design change.

The configuration of the distributed shared memory in which the nodes includes the shared memory is explained as an example. However, this embodiment can also be applied to a cluster type configuration in which a shared memory is not provided in nodes and is provided separately from the nodes.

## Claims

1. An information processing system (1) comprising:
a plurality of nodes (1A-1P, 2AB-2DB); and
a shared memory (3) connected to the plurality of nodes, wherein each of the nodes includes:
a plurality of functional circuits (B1);
a control device (22, V1-V4) configured to control the functional circuits (B1); and
a register (rg) configured to store a plurality of interrupt factors that occur in the plurality of functional circuits (B1), and
**characterized in that** the control device (V1) in one node (2AB) among the plurality of nodes is arranged to receive the interrupt factor in each register of a plurality of other nodes (1A-1P) in response to an occurrence of the interrupt factor of one node(1B) among the plurality of other nodes (1A-1P), extract an interrupt factor (CK,FE) to be detected as a failure among the received interrupt factors, specify a fail node according to an extraction result, and, after suppressing access to the shared memory (3) by the fail node, control to separate the fail node from the information processing system on basis of log information received from the plurality of other nodes.

2. The information processing system according to claim 1, wherein
each of the control devices in the other nodes (1A-1P) is arranged to notify the occurrence of the interrupt factor in the register to the control device in the one node, and
the control device in the one node is arranged to collect, according to the notification from the other nodes, the interrupt factors in each of the registers and the log information in the other nodes.

3. The information processing system according to claim 1 or 2, wherein
the one node includes a network connecting device (2a), and
each of the plurality of other nodes further comprises a processing device (12a) configured to execute data processing and access the shared memory via the network connecting device.

4. The information processing system according to any one of claims 1 to 3, wherein the control device of the one node is arranged to determine whether a second interrupt factor, which is a spreading source of an interrupt factor to be detected as the failure, occurs, and specify a node corresponding to the interrupt factor as the fail node when the second interrupt factor does not occur, and specify a node corresponding to the second interrupt factor as the fail node, when the second interrupt factor occurs.

5. The information processing system according to any one of claims 1 to 4, wherein, when the control device of the one node detects a plurality of the interrupt factors to be detected as the failure, the control device is arranged to suppress access to the shared memory by the specified fail node on the basis of a priority level of the interrupt factor.

6. The information processing system according to any one of claims 3 to 5, wherein, when the interrupt factor to be detected as the failure is an interrupt factor that occurs in the node (1A-1P) that executes the data processing, the control device of the one node (2AB) is arranged to specify the node where the interrupt factor has occurred as the fail node, and, when the interrupt factor to be detected as the failure is an interrupt factor that occurs in the node including the network connecting device, specify a node connected to the network connecting device as the fail node.

7. The information processing system according to any one of claims 4 to 6, wherein
the one node includes a definition table (tb1) including a correspondence relation between the interrupt factor and the interrupt factor which is the spreading source of the interrupt factor, and
the control device of the one node is arranged to determine, on the basis of the definition table, whether the interrupt factor, which is the spreading source of the interrupt factor to be detected as the failure, occurs.

8. The information processing system according to any one of claims 5 to 7, wherein
the one node includes a definition table (tb1) including the priority level corresponding to the interrupt factor, and
the control device of the one node is arranged to determine the priority level of the interrupt factor on the basis of the definition table.

9. The information processing system according to any one of claims 1 to 8, wherein the shared memory is provided in each of the nodes (1A-1P).

10. A method for processing a failure in an information processing system (1) having a plurality of nodes (1A-1P, 2AB-2DB) and a shared memory (3), the method comprising:
receiving an interrupt factor in each register (rg) of a plurality of other nodes (1A-1P) among the plurality of nodes, in response to an occurrence of an interrupt factor of one node (1B) among the plurality of other nodes (1A-1P), by one node among the plurality of nodes;
extracting an interrupt factor (CK,FE) to be detected as a failure among the received interrupt factors;
specifying a fail node according to an extraction result;
suppressing access to the shared memory (3) by the fail node; and
controlling to separate the fail node from the information processing system on basis of log information received from the plurality of the other nodes.

11. The method according to claim 10, wherein the receiving comprising:
notifying the occurrence of the interrupt factor in the register to the one node: and
collecting, according to the notification from the other nodes, the interrupt factors in each of the registers and the log information in the other nodes by the one node.

12. The method according to claim 10 or 11, wherein the specifying further comprising:
determining whether a second interrupt factor, which is a spreading source of an interrupt factor to be detected as the failure, occurs;
first specifying a node corresponding to the interrupt factor as the fail node when the second interrupt factor does not occur; and
second specifying a node corresponding to the second interrupt factor as the fail node, when the second interrupt factor occurs.

13. The method according to any one of claims 10 to 12, wherein the suppressing further comprising:
suppressing access to the shared memory by the specified fail node on the basis of a priority level of the interrupt factor when detecting a plurality of the interrupt factors to be detected as the failure.

14. The method according to any one of claims 10 to 13, wherein the specifying further comprising:
third specifying the node where the interrupt factor has occurred as the fail node when the interrupt factor to be detected as the failure is an interrupt factor that occurs in the node (1A-1P) that executes the data processing; and
fourth specifying a node connected to a network connecting device as the fail node, when the interrupt factor to be detected as the failure is an interrupt factor that occurs in a node including the network connecting device.

15. The method according to any one of claims 12 to 14, wherein the determining further comprising;
determining, on the basis of definition table (tb1) including a correspondence relation between the interrupt factor and the interrupt factor which is the spreading source of the interrupt factor, whether the interrupt factor, which is the spreading source of the interrupt factor to be detected as the failure, occurs.
